# EUROPEAN PATENT APPLICATION

(11) **EP 2 026 510 A1**
(43) Date of publication of application: **18.02.2009**
(21) Application number: 08700087.3
(22) Date of filing: 09.01.2008
(51) Int. Cl.: H04L 12/43

(54) **A TIME SYNCHRONOUS METHOD, SYSTEM AND APPARATUS**

(30) Priority: 15.02.2007 CN 200710080259
(71) Applicant: Huawei Technologies Co., Ltd., Longgang District, Shenzhen Guangdong 518129 (CN)
(72) Inventor: ZHANG, Qing, Shenzhen Guangdong 518129 (CN)
(74) Representative: Thun, Clemens
(86) International application number: PCT/CN2008/070063
(87) International publication number: WO 2008/098491

(57) **Abstract**

A method for time synchronization, applied in the Synchronous Digital Hierarchy (SDH), includes: sending, by a master node, synchronization time information to a slave node through a section overhead; adjusting, by the slave node, its own time to achieve time synchronization according to the synchronization time information carried in the received section overhead. A system, a master node and a slave node for time synchronization are also provided. With the invention, the synchronization time information is not affected by tributary pointer adjustment, and no phase transient occurs when the coding signal of the synchronization time information is transmitted. As a result, the precision of time synchronization is improved.

## Description

### Field of the Invention

The invention relates to synchronization technologies, and in particular, to a method, system and apparatus for time synchronization.

### Background of the Invention

In a time synchronization system, if time synchronization is not as precise as what the system requires, the system may be unable to work normally.

For example, the Code Division Multiple Access (CDMA) wireless base station is a global time synchronization system, and all the Mobile Stations (MSs), Base Transceiver Stations (BTSs) and Base Station Controllers (BSCs) need to be synchronized in time, that is, all the terminal equipment and base stations need to be absolutely consistent in time, so that the services such as handoff of MS and data transport can be operated normally. If the MSs, BTSs and BSCs are not synchronized in time, the services cannot be operated normally. In the CDMA system, the precision required for time synchronization is 3µs, and the pilot time calibration error should generally be less than 3µs and cannot exceed 10µs in any circumstance; otherwise, the system cannot work normally.

In addition to the CDMA system, many other systems such as the Time Division - Synchronous Code Division Multiple Access (TD-SCDMA) system and the World Interoperability for Microwave Access (WiMAX) system also need highly precise time synchronization at a µs level.

At present, the Global Positioning System (GPS) is adapted to guarantee time synchronization in these time synchronization systems that impose high precision requirements. The GPS receiving system is generally composed of a receiving module, antennas, feeders and protection parts. It features complicated structure and high cost. In addition, it involves equipment installation and outdoor antenna installation, so the cost of the total system is very high. Moreover, the process of selecting locations of GPS antennas for installation is very complicated and needs rich engineering experience. In a complicated geographical environment, the GPS receiving system works unstably mostly due to inappropriate selection of antenna locations. Therefore, the GPS solution features such weaknesses as high cost, complicated installation process and instability.

Other methods and technologies in the prior art for time synchronization are not precise enough to meet the CDMA system's precision requirement for time synchronization.

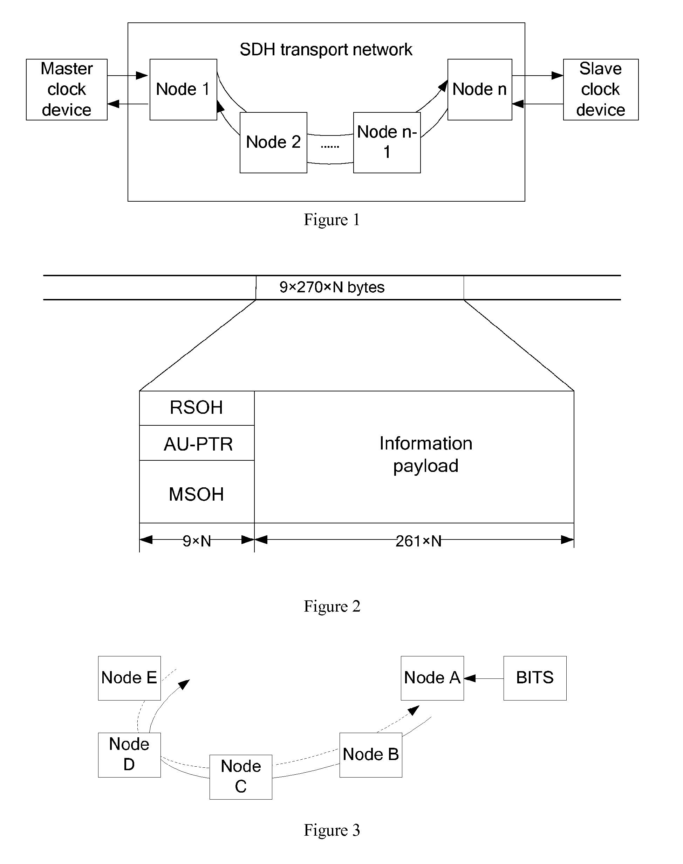

For example, Figure 1 shows a method for time synchronization using the tributary 2Mbit/s signal of the Synchronous Digital Hierarchy (SDH). In Figure 1, the method uses the tributary 2Mbit/s signal for transmitting service data in the SDH transport network for time synchronization.

Through an idle time slot x (TSx) in the 2.048Mbit/s service data stream between a master clock device and a slave clock device, node n which is nearest to the slave clock device sends a time synchronization request to node 1 which is nearest to the master clock device through other nodes of the SDH network. The node 1 extracts the time synchronization request information from the TSx. After processed by the master clock device, the time synchronization request information is sent to the node n through TSx in the opposite direction. The node n extracts information necessary for time synchronization from the TSx and sends the extracted information to the slave clock device. The slave clock device measures the time difference between the TSx used for sending the request and the TSx used for giving a reply and divides the time difference by 2 to obtain the delay between the master clock device and the slave clock device. Then the slave clock device adjusts its own time according to the synchronization time information sent by the master clock device through the TSx of the service data stream and the delay between it and the master clock device, so as to achieve time synchronization.

However, before synchronization between the master clock device and the slave clock device, the clock signal of the master clock device differs from that of the slave clock device. Therefore, the idle TSs in the service data stream used in the synchronization process may be different. The prior SDH technology adopts the pointer adjustment technology to solve the problem. One pointer adjustment generates eight element Unit Intervals (UIs), about 3.565µs phase transient, for a tributary signal. Therefore, when a tributary signal passes through the de-synchronization circuits of the master clock device and the slave clock device, a phase transition process is generated, thus generating output clock transient to the tributary unit. As a result, certain deviation occurs to the synchronization time information. Meanwhile, since the drift of the SDH 2Mbit/s tributary signal may reach 18µs, the precision of time synchronization method is very low. In addition, at the slave clock device side, the idle TSs into which the time request information is written are same in receiving and sending the 2Mbit/s service data stream, but the receiving TS and sending TS may deviate greatly in phase, which increases the delay measurement error and lowers the precision of time synchronization. Therefore, this method is not suitable for the applications with higher time synchronization requirement, for example, the precision requirement of less than 10µs.

### Summary of the Invention

An embodiment of the invention provides a method for time synchronization to improve the precision of time synchronization.

An embodiment of the invention also provides a system for time synchronization to improve the precision of time synchronization.

An embodiment of the invention provides a master node and a slave node to improve the precision of time synchronization.

To achieve the preceding objectives, the technical scheme of embodiments of the invention is as follows:
A method for time synchronization, applied in the SDH, includes:
   sending, by a master node, synchronization time information to a slave node through a section overhead; and
   adjusting, by the slave node, its own time according to the synchronization time information carried in the received section overhead to achieve time synchronization.
A system for time synchronization using a SDH line includes:
   a master node, adapted to send synchronization time information to a slave node through a section overhead; and
   a slave node, adapted to receive the synchronization time information sent from the master node through a section overhead and synchronize the time according to the synchronization time information.
A master node, applied in the SDH, includes:
   a time synchronization module, adapted to obtain synchronization time information; and
   a synchronization time information sending module, adapted to send the synchronization time information obtained by the time synchronization module to a slave node through a section overhead.
A slave node, applied in the SDH, includes:
   a transceiver module, adapted to receive synchronization time information sent by the master node through a section overhead; and
   a synchronization module, adapted to perform time synchronization according to the synchronization time information received by the transceiver module.

Compared with the prior art, in the method, system and apparatus for time synchronization provided in embodiments of the invention, the master node writes synchronized time information into a section overhead and broadcasts the section overhead to the slave node. That is, by using line transmission, time information may be transparently transmitted, and the transmission shift is very small, so that the synchronization time information is not affected by tributary pointer adjustment, which greatly improves the precision of time synchronization.

### Brief Description of the Drawings

Figure 1 shows a method for time synchronization by using the SDH in the prior art;
Figure 2 illustrates the structure of an SDH signal in the prior art;
Figure 3 is a schematic diagram illustrating the structure of a time synchronization system according to an embodiment of the invention;
Figure 4 is a flow chart of a synchronization method according to an embodiment of the invention;
Figure 5 is a flow chart of a delay measuring method according to an embodiment of the invention;
Figure 6 is a schematic diagram illustrating the broadcast process by the master node according to an embodiment of the invention; and
Figure 7 illustrates a practical application of a system for time synchronization according to an embodiment of the invention.

### Detailed Description of the Invention

The invention is described in detail with reference to specific embodiments and the accompanying drawings hereunder.

An embodiment of the invention provides a method for time synchronization, in which a master node sends synchronization time information to a slave node through a section overhead and the slave node adjusts its own time according to the synchronization time information carried in the received section overhead so as to achieve time synchronization.

The following describes a method for time synchronization provided in an embodiment of the invention by taking the SDH system as an example.

Figure 2 illustrates the frame structure of an SDH signal in the prior art. As shown in Figure 2, the SDH signal, i.e., the Synchronous Transport Module N (STM-N), is composed of 9x270xN bytes. N is equal to the N in STM-N, indicating that the signal is generated through byte interleave multiplexing by means of N Synchronous Transfer Modules 1 (STM-1s). The 9xN bytes are Section Overhead (SOH) and Administration Unit Pointer (AU-PTR) of the STM-N signal. The SOH is necessary additional bytes for network operation, administration and management to guarantee the normal and flexible transmission of the information payload. The SOH has powerful capability in filtering jitters, and is not affected by tributary pointer adjustment. Therefore, it can be transparently transmitted between STM-N ports. The SOH includes a Multiplex Section Overhead (MSOH) byte and a Regenerator Section Overhead (RSOH) byte. The RSOH is used for managing and monitoring each STM-1, and the MSOH is used for managing and monitoring the STM-N.

A method for time synchronization provided in an embodiment of the invention is to embed the coding signal of synchronization time information into idle bytes of a section overhead. Because the bytes of a section overhead feature small transmission drift and are not affected by pointer adjustment, the method provided in an embodiment of the invention will not cause phase transient of the synchronization time signal, thus greatly improving the precision of time synchronization.

The coding signal of the synchronization time information described above may be an 8-bit time information code. For example, the most significant 2 bits may be set as the identifier bits of the 8-bit code, 00 as the identifier of the start frame of the broadcast packet sent from the master node, 01 as the identifier of a frame that is not the start frame of the broadcast packet sent from the master node, 10 as the delay request identifier, and 11 as the identifier without delay request; the least significant 6 bits may be set as the information bits, where 6-bit synchronization time information is written when the master node sends the broadcast packet, or the equipment identifier of the slave node is written when the slave node measures the delay.

Figure 3 is a schematic diagram illustrating the structure of a system for time synchronization according to an embodiment of the invention. As shown in Figure 3, the system includes a Building Integrated Timing Supply System (BITS), a master node A, a slave node B, a slave node C, a slave node D, and a slave node E.

The BITS is adapted to provide precise synchronization time information for the master node A. The master node A is adapted to receive precise synchronization time information from the BITS and send the synchronization time information to each slave node by broadcasting the synchronization time information through a section overhead. A slave node is adapted to receive the synchronization time information sent from the master node A and perform time synchronization according to the synchronization time information and the delay between each slave node and the master node A measured by the slave node according to the section overhead.

In practice, the BITS may be omitted, that is, the master node A takes its own time as the synchronization time information; or the master node A may also serve as a slave node of a higher-level network and perform time synchronization with the master node of the higher-level network so as to obtain accurate synchronization time information.

Specifically, a master node includes a time synchronization module, adapted to obtain the synchronization time information, in particular, to perform time synchronization with the BITS or the master node of a higher-level network so as to obtain the synchronization time information, or to take the master node's own time as the synchronization time information; and a synchronization time information sending module, adapted to send the synchronization time information obtained by the time synchronization module to each slave node through a section overhead.

A slave node includes a transceiver module, adapted to receive the synchronization time information sent by the master node through a section overhead, and a synchronization module, adapted to perform time synchronization according to the synchronization time information received by the transceiver module. A slave node may also include a delay measuring module, adapted to measure the delay between the slave node and the master node. Accordingly, the synchronization module may also perform time synchronization according to the synchronization time information received by the transceiver module and the delay measured by the delay measuring module.

The master node and each slave node are connected in turn to form an optical transport line network. The direction from the master node A to a slave node is a network forward channel, as shown by the solid arrow line in Figure 3; the direction from a slave node to the master node A is a network reverse channel, as shown by the dotted arrow line in Figure 3. Each slave node may periodically send a section overhead to the master node via the network reverse channel.

In practice, the master node and each slave node may also be connected to form an optical transport ring network. The direction from the master node A to a slave node is a network forward channel, and the direction from a slave node to the master node A is a network reverse channel.

The master node and each slave node may be connected by two optical fiber lines to form an optical transport network which has a network forward channel and a network reverse channel.

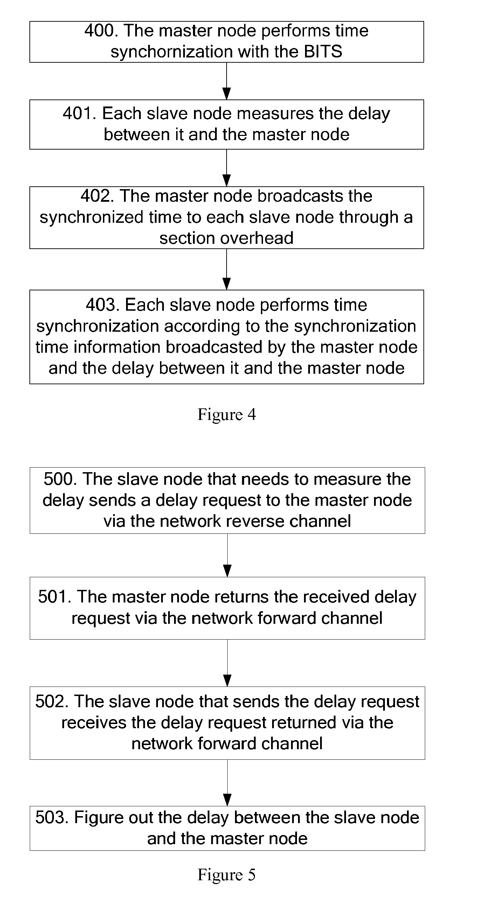

The following describes a method for time synchronization provided in an embodiment of the invention in detail with reference to Figure 3 and Figure 4. Figure 4 is a flow chart of a method for time synchronization provided in an embodiment of the invention. The method includes the following steps:
Step 400: The master node performs time synchronization with the BITS.

In the system shown in Figure 3, the master node A performs time synchronization with the BITS. The method for time synchronization between the master node and the BITS is the same as the prior art and will not be described any further.

In practice, this step may be omitted, that is, the master node may take its own time as the synchronization time information of a network. Other methods may also be available for time synchronization, for example, the master node may serve as a slave node of a higher-level network and perform time synchronization with a master node of the higher-level network so as to obtain the synchronization time information.

Step 401: Each slave node measures the time delays between it and the master node through a section overhead.

This step may also be executed before step 400.

In this step, each slave node measures the time delays between it and the master node through a section overhead. The measuring process is shown in Figure 5, including:
Step 500: The slave node which needs to measure time delays sends a delay request to the master node through a section overhead in the network reverse channel.

For example, in Figure 3, when node C needs to measure the time delays, nodes C first determines whether the section overhead received from node D via the network reverse channel is a delay request; if the section overhead received from the node D includes delay request identifier 10, the section overhead is a delay request; if the section overhead includes no delay request identifier 11, the section overhead is not a delay request. If the node C determines that the section overhead is not a delay request, the node C embeds the delay request identifier 10 and its own equipment ID into idle bytes of the section overhead and sends the section overhead to the node B. If the node C determines that the section overhead received is a time request, the node C cannot send a delay request through this section overhead, but has to wait for a next section overhead which is received via the network reverse channel and does not include a delay request identifier. In this case, the node C forwards the delay request of the node D to the node B. The node B performs the same judging and processing as the node C does and transfers the delay request to the master node A.

Step 501: The master node returns the received delay request via the network forward channel.

Step 502: The slave node that sends the delay request receives the delay request returned via the network forward channel.

In this step, after receiving the delay request returned, if the node B detects that the equipment ID carried in the delay request is not the equipment ID of the node B, the node B forwards the delay request to the node C. After receiving the delay request information, if the node C detects that the equipment ID carried in the delay request is same as that of the node C, step 503 is executed.

Step 503: The slave node that sends the delay request figures out the time delays between the slave node and the master node.

In this step, the node C that sends the delay request figures out the time delays between the delay request sent via the network reverse channel and the delay request received via the network forward channel, obtains the bi-directional time delays between the slave node and the master node, divides the bi-directional time delays by 2, and obtains the unidirectional delay between the slave node and the master node A. For example, when the node C sends the delay request via the network reverse channel, the node C starts its internal counter; when receiving the delay request returned from the master node via the network forward channel, the node C stops the counter. Then the node C multiplies the counted value by the counter's clock cycle, obtains the bidirectional time delays between the node C and the master node A, divides the bidirectional delay by 2, and obtains the unidirectional time delays between the node C and the master node A.

There are other methods for calculating time delays in the prior art, which are not detailed here.

Step 402: The master node writes the synchronization time information into idle bytes of the section overhead and broadcasts the section overhead containing the synchronization time information to each slave node via the network forward channel.

After synchronizing time with the BITS, the master node encodes the synchronization time information first, embeds the code of the synchronization time information into idle bytes of the section overhead, and broadcasts the section overhead, for example, it encodes the synchronization time information into 8 bits. For example, if the time for synchronization between the master node A and the BITS is 22:10'05", the master node A may first encode the 05" to 6 bits, add the identifier 00 to the 6 bits to form a broadcast packet and broadcast the packet. Then the master node A encodes the 10' to 6 bits, adds the identifier 01 to the 6 bits to form a broadcast packet and broadcasts the packet, wherein the identifier 01 indicates that the 8-bit code is a non-start frame of the broadcast packet. In the end, the master node A encodes the 22 to 6 bits, adds the identifier 01 to the 6 bits to form a broadcast packet and broadcasts the packet.

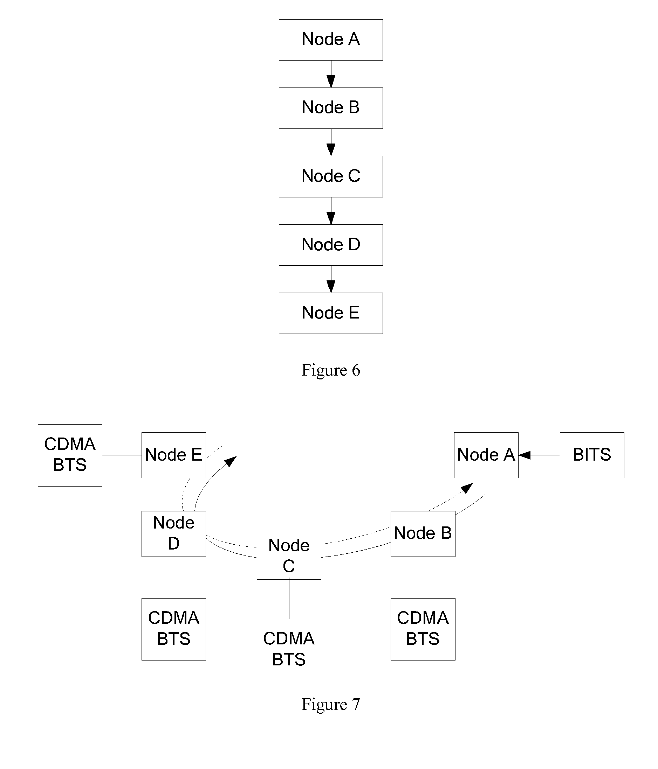

In this step, the broadcast process by the master node A is shown in Figure 6, in which the master node A sends the broadcast packet containing the synchronization time information to the slave node B through a section overhead. The node B extracts the synchronization time information and forwards the broadcast packet to the next slave node C through a section overhead. The node C extracts the synchronization time information after receiving the broadcast packet and forwards the broadcast packet to the node D, until the last slave node of the network which is node E in this embodiment receives the broadcast packet through the section overhead and extracts the synchronization time information.

Step 403: Each slave node performs time synchronization according to the synchronization time information broadcasted by the master node and the time delays between each slave node and the master node.

In this step, after receiving the broadcast packet in the section overhead sent by the master node A, each slave node extracts the synchronization time information, adds the unidirectional time delays between it and the master node A to the extracted synchronization time information to obtain the time information for synchronization, and adjusts the time of each slave node according to the time information for synchronization.

In practice, after step 403 is executed, the method may further include: a slave node measures the time delays between it and the master node and performs fine tune for the time of the slave node after synchronization according to the measured time delays, by adding the unidirectional delay between the slave node and the master node to the time of the slave node after synchronization.

In practice, when the precision requirement for time synchronization is not high, in the method for time synchronization provided in an embodiment of the invention, the step in which the slave node measures the time delays between it and the master node may be omitted, or the measurement may be performed by the GPS. The method for measuring the time delays through the GPS is the same as prior art and is described any further.

After time synchronization, each SDH slave node may send accurate time information to local service equipment. The practical application of the system for time synchronization provided in an embodiment of the invention is shown in Figure 7. As shown in Figure 7, in each CDMA BTS, an SDH slave node obtains accurate global synchronization time information from the master node and provides accurate time information for the local CDMA BTSs.

A method for time synchronization provided in an embodiment of the invention may also be used for the time synchronization between a master node and a slave node, for example, it may be applied in a level-by-level synchronization system, that is, the node B is synchronous with the node A, the node C is synchronous with the node B and the node D is synchronous with the node C. Therefore, the method for time synchronization provided in an embodiment of the invention is not limited to the system structure provided in the embodiment of the invention.

In addition to the SDH network, the technical scheme provided in an embodiment of the invention may also be applied in other transport networks that use the optical wave as the transport medium, such as Synchronous Optical Network (SONET) and Optical Transfer Network (OTN). In this case, the principle is the same as the method according to an embodiment of the invention and will not be described any further.

From the above description, we can see that according to a method for time synchronization provided in an embodiment of the invention, the master node encodes the synchronization time information, writes the code into idle bytes of a section overhead, and transmits the section overhead via the network forward channel. With this method, time information may be transparently transmitted, the transmission shift is very small, and the synchronization time information is not affected by tributary pointer adjustment and no phase transient occurs during the transmission of the coding signal of the synchronization time information, which greatly improves the precision of time synchronization.

Meanwhile, in the case of time delays measurement, the delay request information is written into the bytes of the section overhead and is transmitted in the network reverse channel, so that the delay request information sent by the slave node and the delay request information returned by the master node through the network forward channel are all transmitted in the line through the section overhead, instead of through the tributary of the transport service, which makes the transmission drift small. As a result, the precision of delay measurement is greatly improved.

When the method for time synchronization provided in an embodiment of the invention is applied in a CDMA system, only software update needs to be performed for the prior SDH nodes, and no complicated installation is involved, which reduces the cost and improves the stability of the time synchronization system.

Although the invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for time synchronization, applied in the SDH,comprising:
receiving, by a slave node, synchronization time information sent by a master node through a section overhead; and
adjusting, by the slave node, the time of the slave node according to the synchronization time information carried in the received section overhead to achieve time synchronization.

2. The method of claim 1, wherein, before the slave node receives synchronization time information sent by a master node through a section overhead, the method further comprises :
by the master node, performing time synchronization with a Building Integrated Timing Supply System (BITS)and obtaining the synchronization time information; or
by the master node, performing time synchronization with a master node of a higher-level network and obtaining the synchronization time information.

3. The method of claim 1 or 2, wherein, before the slave node adjusts its own time according to the synchronization time information carried in the received section overhead, the method comprises: measuring, by the slave node, the time delays between it and the master node;
the adjusting, by the slave node, the time of the slave node according to the synchronization time information carried in the received section overhead is: adjusting, by the slave node, the time of the slave node according to the synchronization time information carried in the received section overhead and the time delays between the slave node and the master node.

4. The method of claim 3, wherein, after the slave node adjusts its own time according to the synchronization time information carried in the received section overhead, the method further comprises:
measuring, by the slave node, the time delays between it and the master node and performing fine tune for its synchronized time according to the time delays.

5. The method of claim 3, wherein the measuring the time delays between it and the master node by the slave node is: measuring, by the slave node, the time delays between it and the master node through a section overhead.

6. The method of claim 5, wherein the measuring the time delays between it and the master node by the slave node through a section overhead, comprising:
embedding, by the slave node, a delay request identifier and an equipment identifier of the slave node into the section overhead to form a delay request and sending the delay request to the master node;
returning, by the master node, the delay request to the slave node; and
by the slave node, receiving the delay request returned from the master node and obtaining the delay between the slave node and the master node according to the returned delay request and the delay request sent to the master node.

7. The method of claim 5, wherein
the master node is connected with multiple slave nodes in turn to form an optical transport network which has a network forward channel and a network reverse channel;
the measuring the delay between it and the master node by a slave node through a section overhead comprises:
embedding, by the slave node which needs to measure the delay, the delay request identifier into the section overhead transferred to the master node via the network reverse channel to form a delay request;
after receiving the delay request, sending, by the master node, the delay request to each slave node via the network forward channel; and
after receiving the delay request transferred via the network forward channel, obtaining, by the slave node which needs to measure the delay, the delay between it and the master node according to the received delay request and the delay request sent by the slave node via the network reverse channel.

8. The method of claim 7, wherein before the slave node which needs to measure the delay embeds the delay request identifier into the section overhead transferred to the master node via the network reverse channel, the method further comprises:
checking, by the slave node which needs to measure the delay, whether the section overhead transferred via the network reverse channel is a delay request, and if so, forwarding the delay request; or else, embedding the delay request identifier and the equipment identifier of the slave node into the section overhead.

9. The method of claim 5, wherein
the master node is connected with multiple slave nodes in turn to form an optical transport network which has a network forward channel and a network reverse channel; and
the sending the synchronization time information to the slave node by the master node through a section overhead comprises:
sending, by the master node, the synchronization time information to the slave node through a section overhead via the network forward channel; and
transferring, by the salve node, the synchronization time information to a next slave node through a section overhead via the network forward channel.

10. A system for time synchronization using the SDH, comprising:
a master node, adapted to send synchronization time information to a slave node through a section overhead; and
a slave node, adapted to receive the synchronization time information sent by the master node through a section overhead and perform time synchronization according to the synchronization time information.

11. The system of claim 10, further comprising a Building Integrated Timing Supply System (BITS), adapted to provide synchronization time information for the master node, wherein:
the master node is further adapted to perform time synchronization with the BITS and obtain the synchronization time information.

12. The system of claim 10, wherein the master node is a salve node of a higher-level network; and the master node is further adapted to perform time synchronization with a master node of the higher-level network and obtain the synchronization time information.

13. The system of claim 10, wherein the salve node is further adapted to measure the delay between it and the master node and perform time synchronization according to the synchronous time information and the delay between it and the master node.

14. The system of claim 10, wherein the number of slave nodes is more than one and the master node is connected with each slave node in turn to form an optical transport network which has a network forward channel and a network reverse channel; and
the slave node is further adapted to transfer the synchronization time information sent by the master node through a section overhead to a next slave node via the network forward channel.

15. A master node, applied in the SDH, comprising a time synchronization module and a synchronization time information sending module, wherein:
the time synchronization module is adapted to obtain synchronization time information; and
the synchronization time information sending module is adapted to send the synchronization time information obtained by the time synchronization module to a slave node through a section overhead.

16. The master node of claim 15, wherein the time synchronization module is adapted to perform time synchronization with a Building Integrated Timing Supply System (BITS) or a master node of a higher-level network where the master node is located and obtain the synchronization time information, or uses the time of the master node as the synchronization time information.

17. A slave node, applied in the SDH, comprising a transceiver module and a synchronization module, wherein:
the transceiver module is adapted to receive synchronization time information sent by the master node through a section overhead; and
the synchronization module is adapted to perform time synchronization according to the synchronization time information received by the transceiver module.

18. The slave node of claim 17, further comprising a delay measuring module, adapted to measure the delay between the slave node and the master node, wherein:
the time synchronization module performs time synchronization according to the synchronization time information received by the transceiver module and the delay measured by the delay measuring module.
